# EUROPEAN PATENT APPLICATION

(11) **EP 1 109 400 A1**
(43) Date of publication of application: **20.06.2001**
(21) Application number: 99403178.9
(22) Date of filing: 16.12.1999
(51) Int. Cl.: H04N 5/00, H04N 7/173, H04N 17/00, H04N 7/24

(54) **Transmission of a command to a receiver or to a decoder**

(71) Applicant: CANAL+ Société Anonyme, 75711 Paris Cedex 15 (FR)
(72) Inventor: Fichet, Laurent, 78320 Le Mesnil Denis (FR)
(74) Representative: Cozens, Paul Dennis

(57) **Abstract**

A method of instructing a receiver/decoder to perform an action is described. The method comprises transmitting a command to the receiver/decoder via a broadcast system, the command instructing the receiver/decoder to perform the action. Apparatus for generating a message comprising a command for transmission in a broadcast system, a corresponding receiver/decoder, and a message for transmission in a broadcast system, the message comprising a command to instruct the receiver/decoder to perform an action, are also described.

## Description

The invention relates to receiver/decoders, and in particular to receiver/decoders used in broadcast systems, such as for television, radio, cellular phone or other such systems.

Broadcast systems are used for transmitting signals, such as digital or analogue television signals, from a broadcast centre to a user, via a medium such as a satellite, cable or terrestrial broadcast link. Receiver/decoders at the user end are used for receiving and/or decoding the signals, typically for input to a television set. In the case of digital transmission, digital channels are encoded into a digital data stream at the transmitter end, and are decoded at the receiver end using a receiver/decoder, which may typically be either in a digital set-top box (DSTB) or in an integrated digital television. In the case of analogue transmission, a receiver/decoder may be provided at the user to convert the transmitted signals into a format for input to a television set.

In known broadcast systems, actions may be taken at the receiver/decoder in response to a command from the user, such as may be input by a remote control device. Such commands may include changing channel or showing the status of the receiver/decoder on the screen.

According to a first aspect of the invention, there is provided a method of instructing a receiver/decoder (in a broadcast system) to perform an action, the method comprising transmitting a command to the receiver/decoder via a broadcast system, the command instructing the receiver/decoder to perform the action.

The invention provides the advantage that a command can be transmitted to a receiver/decoder from a remote location, for example from a commercial operator, without requiring a separate medium to be provided for transmitting the command.

The broadcast system preferably includes a broadcast medium such as a satellite link, cable (including optical fibre), or terrestrial broadcast, as well as a transmitter for transmitting over the broadcast medium. Preferably, the broadcast system is used to broadcast audio and/or visual signals such as radio or television signals to the receiver/decoder. Thus it will be appreciated that a medium which is used to broadcast audio/visual signals may be used to transmit the command.

Preferably, the command is transmitted as part of a message, and preferably the message is in the form of an entitlement management message. This can allow further information regarding the command and the transmitting of the command to be included in the message.

Entitlement management messages (EMMs) are normally linked to access control, and have a certain structure such as a header and a data field. It will be appreciated that a message may take the form, or be based on the structure of, an entitlement management message, although it may not necessarily be used for managing entitlement.

The message may or may not be encrypted. According to embodiments of the invention, the message can be such that no confidential or sensitive information (for example relating to a smartcard or encryption codes) is included in the message, and the message need not be encrypted. This may be advantageous regarding the efficiency of transmitting and receiving the message.

Preferably the message further comprises an identifier of a commercial operator. Since the message will typically emanate from the commercial operator, this can allow the source of the message to be identified. The method may further comprise comparing the identifier to an identifier stored at the receiver/decoder and performing the action in dependence on the result of the comparison. In this way it can be ensured that only those receiver/decoders for which the commercial operator has responsibility are affected by the command.

Preferably, the message comprises an identifier of at least one receiver/decoder, and the command instructs the at least one receiver/decoder to perform the action. This can allow a command to be directed to a particular receiver/decoder or groups of receiver/decoders.

The message may comprise an identifier of only one receiver/decoder, and the one receiver/decoder may perform the action. In this way, it is possible to cause a receiver/decoder to carry out an action from a remote location, the action being specific to that receiver/decoder. As is described below, this feature is particularly advantageous in the monitoring of receiver/decoders and in the debugging of receiver/decoders.

Preferably the message is generated by a Subscriber Authorization System (SAS).

Preferably the command is sent by a Subscriber Management System (SMS) to the SAS for transmission. Preferably, the command is transmitted by the SAS, by which it will be appreciated that the command may be sent to a separate transmitter for transmission.

Thus, in a preferred embodiment, the SMS generates a command to be sent to a receiver/decoder, and sends details of the command to the SAS for transmission to the receiver/decoder. Preferably the SAS generates a message for transmission to the receiver/decoder. By this method, the SAS can be configured to accept and to transmit any command sent by the SMS without needing to be updated when a new type of command is to be sent to the receiver/decoder.

Preferably, the command is transmitted to the processor of the receiver/decoder, and preferably the command is not transmitted to the smartcard. By using the receiver/decoder itself rather than, for example, the smartcard to receive commands, it is possible to avoid the use of confidential and/or sensitive information in the command. Thus encryption of the command may not be necessary. Furthermore, it is advantageous for the request for the receiver/decoder to perform an action to be sent directly to the receiver/decoder itself.

The action may comprise altering a setting and/or parameter of the receiver/decoder. Thus the settings and/or parameters of a receiver/decoder can be altered remotely by a commercial operator.

The action may comprise at least one of changing channels, changing the tuning of a channel and scanning channels. The scanning channels action may comprise a full scan, a scan of a part of a range and/or an update scan. The changing of channels is preferably effected using Digital Video Broadcasting (DVB) information relating to the channels. The use of DVB can enable the channel to be changed even if the user has changed the settings of the receiver/decoder. In this case, the receiver/decoder preferably stores DVB information corresponding to one or more receiver/decoder channels.

Thus the commercial operator may update or change the tuning of a receiver/decoder remotely.

The action may comprise sending information from the receiver/decoder, which may be information relating to the receiver/decoder. For example, the receiver/decoder may perform a callback, to send information to the commercial operator, or elsewhere.

The information may comprise information regarding one or more of the settings and parameters of the receiver/decoder, actions carried out by the receiver/decoder and channel signal strength. Thus information relating to the receiver/decoder can be retrieved remotely. Such information may be useful as statistical information and/or useful in fault-finding and debugging.

Preferably, the information is sent by the processor of the receiver/decoder preferably the information is not sent by the smartcard. By using the receiver/decoder itself rather than, for example, the smartcard to send information, it is possible to avoid the use of confidential and/or sensitive information. Thus encryption of the information may not be necessary.

The information from the receiver/decoder may be sent to an SAS, or alternatively the information may be sent to an apparatus which can communicate with the receiver/decoder, such as a computer or a testing device. The apparatus may be connected to the receiver/decoder or may communicate with the receiver/decoder by other means such as an infrared link.

Preferably, the method further includes the step of performing the action at the receiver/decoder in dependence on the command. The method preferably further includes the step of subsequently deleting the command. This can reduce the risk that the same command is carried out again.

The invention also provides a method of determining a setting and/or parameter of a receiver/decoder from a location remote from the receiver/decoder, the method comprising the step of transmitting a command from the remote location via a broadcast system to the receiver/decoder, the command requesting the receiver/decoder to send information relating to the setting and/or parameter of the receiver/decoder. Preferably the receiver/decoder is a single receiver/decoder and the information is sent from that one receiver/decoder.

Thus the method provides a way in which the settings and/or parameters of the receiver/decoder can be determined from a location remote from the receiver/decoder, for example the commercial operator. Thus, if a fault occurs in the receiver/decoder, the cause (and effect) of the fault can be analysed without requiring an engineer to travel to the location of the receiver/decoder.

The invention also provides a method of altering a setting and/or parameter of a receiver/decoder from a location remote from the receiver/decoder, the method comprising transmitting a command from the remote location via a broadcast system to the receiver/decoder, the command requesting the receiver/decoder to alter a setting and/or parameter of the receiver/decoder.

Thus it is possible for the settings and/or parameters of the receiver/decoder to be altered remotely, for example by a commercial operator.

In particularly preferred embodiments of the invention, the receiver/decoder is first requested to send information relating to the receiver/decoder and subsequently the settings and/or parameters of the receiver/decoder are altered. Such a method is particularly advantageous where a fault is identified. For example, first a request is made for information regarding the fault; subsequently, a command is sent requesting that the receiver/decoder perform an action to rectify the fault.

The invention also provides a computer program for carrying out any of the methods described above, and a computer readable medium having stored thereon a program for carrying out any of the methods described above.

In another aspect of the invention there is provided apparatus for generating a message for transmission in a broadcast system, comprising means for generating the message, the message comprising a command instructing a receiver/decoder to perform an action. The means for generating the message may be, for example, a suitably programmed processor.

Preferably the apparatus includes a multiplexer for multiplexing the message with another signal, such as a audio and/or visual signal. Preferably the apparatus is adapted to send the message (preferably as part of the multiplexed signal) to a broadcast system for transmission.

The message may be in the form of an entitlement management message, which may or may not be encrypted. The message may further comprise an identifier of a commercial operator.

The message may comprise an identifier of at least one receiver/decoder, and the command may be for instructing the at least one receiver/decoder to perform the action. In one embodiment, the message comprises an identifier of only one receiver/decoder, and the command is for instructing the one receiver/decoder to perform the action.

The apparatus may be included in a Subscriber Authorization System (SAS). The SAS may be adapted to receive a command sent by a Subscriber Management System (SMS) and to generate the message in dependence on the command.

The apparatus may be adapted to receive information sent by the receiver/decoder.

The invention further provides apparatus for transmitting a command to a receiver/decoder via a broadcast system, the apparatus comprising a transmitter for transmitting a command to the receiver/decoder to instruct the receiver/decoder to perform an action.

Preferably the apparatus includes a command generator for generating the command. Preferably the command is a part of a message and the transmitter is adapted to transmit the message to the receiver/decoder. Preferably the apparatus further includes a message generator for generating the message.

Preferably the transmitter is adapted to transmit the command to only one receiver/decoder. Preferably the transmitter is adapted to transmit the command to the processor of the receiver/decoder.

Preferably, the apparatus includes an SAS for transmitting the command, and preferably the apparatus further includes an SMS for sending the command to the SAS for transmission. Preferably the SAS is adapted to generate a message for transmission to the receiver/decoder.

Preferably the apparatus further includes an information receiver for receiving information sent by the receiver/decoder. Preferably the SAS includes the information receiver.

In another aspect of the invention there is provided a receiver/decoder comprising a receiver for receiving a command from a transmitter, and a processor for performing an action in response to the command, wherein the transmitter is preferably part of a broadcast system.

In a related aspect of the invention there is provided a receiver/decoder comprising means for receiving a command from a broadcast system and means for performing an action in response to the command.

The means for performing an action may be, for example, a suitably programmed processor. The processor may provide an execution environment for running an application, for example by providing an operating system on which the application can run or by providing a virtual machine on which the application can run.

Preferably the receiver/decoder is adapted to receive signals such as audio and/or visual signals which have been transmitted via the broadcast system. The message may be multiplexed with such signals. The receiver/decoder may be, for example, a DSTB.

The receiver/decoder may further comprise a buffer for storing commands received, and the receiver/decoder may be adapted to consult the buffer before performing the action. For example, the receiver/decoder may be adapted to compare incoming commands with commands stored in the buffer, and to delete duplicate commands. In this way the execution of a duplicate action may be avoided.

Preferably the processor of the receiver/decoder is adapted to send information from the receiver/decoder in response to a command received by the receiver.

Preferably the receiver/decoder is adapted to delete the command when the action has been performed.

The invention also provides a system comprising apparatus for generating a message in any of the forms described above and a broadcast system for transmitting the message to a receiver/decoder, and preferably further comprising a receiver/decoder in any of the forms described above.

In another aspect of the invention there is provided a message for transmission in a broadcast system, the message comprising a command to instruct the receiver/decoder to perform an action.

In a related aspect of the invention there is provided a message for instructing a receiver/decoder in a broadcast system to perform an action, the message comprising a command to instruct the receiver/decoder to perform the action.

Preferably the message is in the form of an entitlement management message.

The message may include a command for altering a setting and/or parameter of the receiver/decoder, for example the command may be for changing channels, changing the tuning of a channel and/or scanning channels, where scanning channels may comprise a full scan, a scan of part of a range and/or an update scan.

The message may further include a parameter associated with the command. For example, if the command is a change channel command, the parameter may be one of channel number and an identifier of a broadcast signal.

The message may include a command for instructing the receiver/decoder to send information, preferably information relating to the receiver/decoder. For example, the information may relate to a setting or parameter of the receiver/decoder, actions carried out by the receiver/decoder and/or channel signal strength.

Preferably, the message further includes an identifier of a receiver/decoder. Preferably the message includes an identifier of only one receiver/decoder. As indicated above, there are advantages in sending a command to a single receiver/decoder.

Preferably, the message is not encrypted, although in some cases encryption of the message will be necessary.

The invention also provides a system including a transmitter for transmitting a command to a receiver/decoder via a broadcast system, and further comprising a receiver/decoder adapted to perform an action in response to the command.

Preferably the system further includes a message generator for generating a message including the command, the transmitter being adapted to transmit the message to the receiver/decoder.

Preferably the system includes an SMS and an SAS, the SMS being adapted to generate the command and to send the command to the SAS, the SAS being adapted to generate a message based on the command and to transmit the message to the receiver/decoder.

The invention also provides a method and apparatus substantially as described with reference to and as illustrated in the accompanying drawings.

Features of one aspect may be applied to other aspects; similarly, method features may be applied to apparatus aspects and *vice versa.*

Preferred features of the present invention will now be described, purely by way of example, with reference to the accompanying drawings, in which:-
Figure 1 shows an overview of a typical digital television system;
Figure 2 shows an overview of a conditional access system;
Figure 3 shows the structure of an Entitlement Management Message (EMM);
Figure 4 shows the structure of a Subscriber Authorization System;
Figure 5 is a block diagram of a receiver/decoder;
Figure 6 shows the architecture of a receiver/decoder;
Figure 7a shows the structure of an Individual DSTB Action command;
Figure 7b shows the structure of an Audience DSTB Action command;
Figure 8a shows the structure of an Individual DSTB Action EMM; and
Figure 8b shows the structure of an Audience DSTB Action EMM

### System Overview

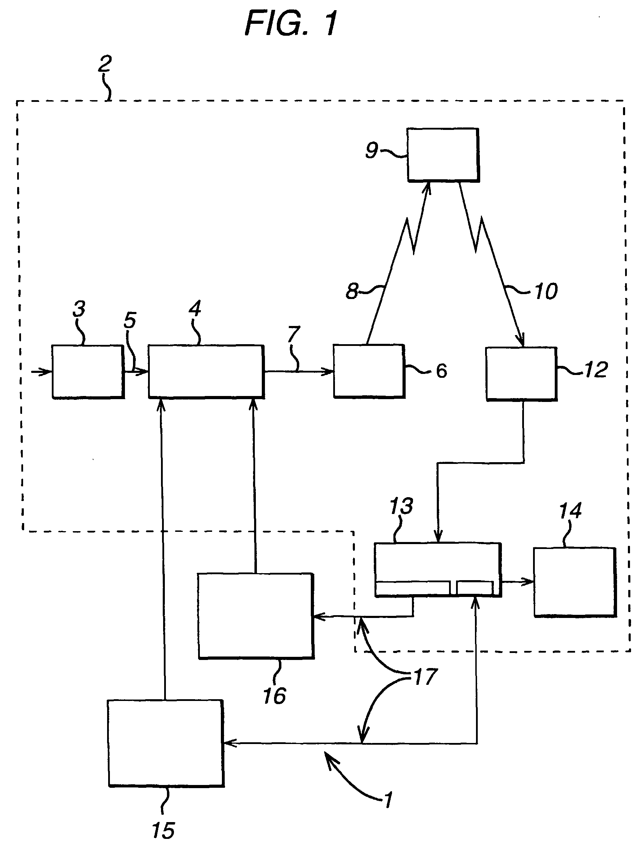

An overview of a digital television system 1 is shown in Figure 1. The invention includes a mostly conventional digital television system 2 that uses the known MPEG-2 compression system to transmit compressed digital signals. In more detail, MPEG-2 compressor 3 in a broadcast centre receives a digital signal stream (typically a stream of video signals). The compressor 3 is connected to a multiplexer and scrambler 4 by linkage 5.

The multiplexer 4 receives a plurality of further input signals, assembles the transport stream and transmits compressed digital signals to a transmitter 6 of the broadcast centre via linkage 7, which can of course take a wide variety of forms including telecommunications links. The transmitter 6 transmits electromagnetic signals via uplink 8 towards a satellite transponder 9, where they are electronically processed and broadcast via notional downlink 10 to earth receiver 12, conventionally in the form of a dish owned or rented by the end user. Other transport channels for transmission of the data are of course possible, such as terrestrial broadcast, cable transmission, combined satellite/cable links, telephone networks etc.

The signals received by receiver 12 are transmitted to an integrated receiver/decoder 13 owned or rented by the end user and connected to the end user's television set 14. The receiver/decoder 13 decodes the compressed MPEG-2 signal into a television signal for the television set 14. Although a separate receiver/decoder is shown in Figure 1, the receiver/decoder may also be part of an integrated digital television. As used herein, the term "receiver/decoder" includes a separate receiver/decoder, such as a set-top box, and a television having a receiver/decoder integrated therewith.

In a multichannel system, the multiplexer 4 handles audio and video information received from a number of parallel sources and interacts with the transmitter 6 to broadcast the information along a corresponding number of channels. In addition to audiovisual information, messages or applications or any other sort of digital data may be introduced in some or all of these channels interlaced with the transmitted digital audio and video information.

A conditional access system 15 is connected to the multiplexer 4 and the receiver/decoder 13, and is located partly in the broadcast centre and partly in the receiver/decoder. It enables the end user to access digital television broadcasts from one or more broadcast suppliers. A smartcard, capable of deciphering messages relating to commercial offers (that is, one or several television programmes sold by the broadcast supplier), can be inserted into the receiver/decoder 13. Using the receiver/decoder 13 and smartcard, the end user may purchase commercial offers in either a subscription mode or a pay-per-view mode.

As mentioned above, programmes transmitted by the system are scrambled at the multiplexer 4, the conditions and encryption keys applied to a given transmission being determined by the access control system 15. Transmission of scrambled data in this way is well known in the field of pay TV systems. Typically, scrambled data is transmitted together with a control word for descrambling of the data, the control word itself being encrypted by a so-called exploitation key and transmitted in encrypted form.

The scrambled data and encrypted control word are then received by the receiver/decoder 13 having access to an equivalent to the exploitation key stored on a smartcard inserted in the receiver/decoder to decrypt the encrypted control word and thereafter descramble the transmitted data. A paid-up subscriber will receive, for example, in a broadcast monthly EMM (Entitlement Management Message) the exploitation key necessary to decrypt the encrypted control word so as to permit viewing of the transmission.

An interactive system 16, also connected to the multiplexer 4 and the receiver/decoder 13 and again located partly in the broadcast centre and partly in the receiver/decoder, enables the end user to interact with various applications via a back channel 17. The back channel may be, for example a Public Switched Telephone Network (PSTN) channel (for example, a modemmed back channel) or an Out of Band (OOB) channel. The back channel may also be used for communications used in the conditional access system 15.

### Conditional Access System

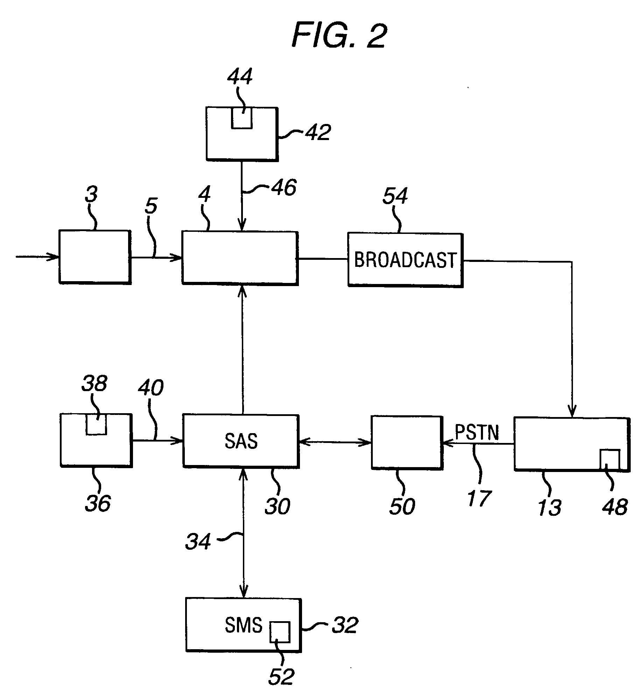

With reference to Figure 2, in overview the conditional access system 15 includes a Subscriber Authorization System (SAS) 30. The SAS 30 is connected to one or more Subscriber Management Systems (SMS) 32, one SMS for each broadcast supplier, by a link 34, which may be a TCP-IP link or other type of link. Alternatively, one SMS could be shared between two commercial operators, or one operator could use two SMSs, and so on.

First encrypting units in the form of ciphering units 36 utilising "mother" smartcards 38 are connected to the SAS by linkage 40. Second encrypting units again in the form of ciphering units 42 utilising mother smartcards 44 are connected to the multiplexer 4 by linkage 46. The receiver/decoder 13 receives a "daughter" smartcard 48. The receiver/decoder is connected directly to the SAS 30 via Communications Servers 50 and the modemmed back channel 17. The SAS sends amongst other things subscription rights to the daughter smartcard on request.

The smartcards contain confidential information from one or more commercial operators. The "mother" smartcard encrypts different kinds of messages and the "daughter" smartcards decrypt the messages, if they have the rights to do so.

With reference to Figure 2, in the broadcast centre, the digital video signal is first compressed (or bit rate reduced), using the MPEG-2 compressor 3. This compressed signal is then transmitted to the multiplexer and scrambler 4 in order to be multiplexed with other data, such as other compressed data.

The scrambler generates a control word used in the scrambling process and included in the MPEG-2 stream in the multiplexer 4. The control word is generated internally and enables the end user's integrated receiver/decoder 13 to descramble the programme.

Access criteria, indicating how the programme is commercialised, are also added to the MPEG-2 stream. The programme may be commercialised in either one of a number of "subscription" modes and/or one of a number of "Pay Per View" (PPV) modes or events. In the subscription mode, the end user subscribes to one or more commercial offers, or "bouquets", thus getting the rights to watch every channel inside those bouquets. In the Pay Per View mode, the end user is provided with the capability to purchase events as he wishes.

Both the control word and the access criteria are used to build an Entitlement Control Message (ECM); this is a message sent in relation with one scrambled program; the message contains a control word (which allows for the descrambling of the program) and the access criteria of the broadcast program. The access criteria and control word are transmitted to the second encrypting unit 42 via the linkage 46. In this unit, an ECM is generated, encrypted and transmitted on to the multiplexer and scrambler 4.

Each service broadcast by a broadcast supplier in a data stream comprises a number of distinct components; for example a television programme includes a video component, an audio component, a sub-title component and so on. Each of these components of a service is individually scrambled and encrypted for subsequent broadcast. In respect of each scrambled component of the service, a separate ECM is required.

The multiplexer 4 receives electrical signals comprising encrypted EMMs from the SAS 30, encrypted ECMs from the second encrypting unit 42 and compressed programmes from the compressor 3. The multiplexer 4 scrambles the programmes and transmits the scrambled programmes, the encrypted EMMs and the encrypted ECMs as electric signals to broadcast system 54, which may be for example a satellite system as shown in Figure 1, or other broadcast system. The receiver/decoder 13 demultiplexes the signals to obtain scrambled programmes with encrypted EMMs and encrypted ECMs.

The receiver/decoder receives the broadcast signal and extracts the MPEG-2 data stream. If a programme is scrambled, the receiver/decoder 13 extracts the corresponding ECM from the MPEG-2 stream and passes the ECM to the "daughter" smartcard 48 of the end user. This slots into a housing in the receiver/decoder 13. The daughter smartcard 48 controls whether the end user has the right to decrypt the ECM and to access the programme. If not, a negative status is passed to the receiver/decoder 13 to indicate that the programme cannot be descrambled. If the end user does have the rights, the ECM is decrypted and the control word extracted. The decoder 13 can then descramble the programme using this control word. The MPEG-2 stream is decompressed and translated into a video signal for onward transmission to television set 14.

If the programme is not scrambled, no ECM will have been transmitted with the MPEG-2 stream and the receiver/decoder 13 decompresses the data and transforms the signal into a video signal for transmission to television set 14.

The Subscriber Management System (SMS) 30 includes a database 52 which manages, amongst others, all of the end user files, commercial offers (such as tariffs and promotions), subscriptions, PPV details, and data regarding end user consumption and authorization. The SMS may be physically remote from the SAS.

The SMS 32 transmits messages to the SAS 30 which imply modifications to or creations of Entitlement Management Messages (EMMs) to be transmitted to end users. The SMS 32 also transmits messages to the SAS 30 which imply no modifications or creations of EMMs but imply only a change in an end user's state (relating to the authorization granted to the end user when ordering products or to the amount that the end user will be charged). The SAS 30 also sends messages (typically requesting information such as call-back information or billing information) to the SMS 32, so that it will be apparent that communication between the two is two-way.

### Entitlement Management Messages (EMMs)

The EMM is a message dedicated to an individual end user (subscriber), or a group of end users, only, in contrast with an ECM, which is dedicated to one scrambled programme only or a set of scrambled programmes if part of the same commercial offer.

Various specific types of EMM are possible. Individual EMMs are dedicated to individual subscribers, and are typically used in the provision of Pay Per View services; these contain the group identifier and the position of the subscriber in that group. So-called "Group" subscription EMMs are dedicated to groups of, say, 256 individual users, and are typically used in the administration of some subscription services. Audience EMMs are dedicated to entire audiences. An "audience" is the totality of subscribers having smartcards which bear the same Operator Identifier (OPI). Finally, a "unique" EMM is addressed to the unique identifier of the smartcard.

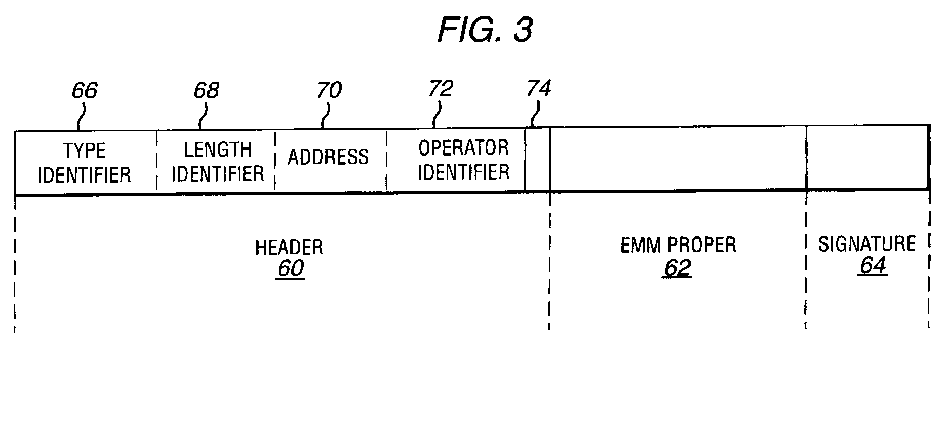

The general form of an EMM which is used in the preferred embodiments is now described with reference to Figure 3. Basically, the EMM, which is implemented as a series of digital data bits, comprises a header 60, the EMM proper 62, and a signature 64. The header 60 in turn comprises a type identifier 66 to identify the type of EMM, a length identifier 68 which gives the length of the EMM, an optional address 70 for the EMM, an operator identifier 72 and a key identifier 74. Finally, the signature 64, which is also optional, provides a number of checks against corruption of the remaining data in the EMM. The type identifer in the header identifies the message as an EMM.

### Subscriber Authorization System (SAS)

Messages generated by the SMS 32 are passed via linkage 34 to the Subscriber Authorization System (SAS) 30, which in turn generates messages acknowledging receipt of the messages generated by the SMS 32 and passes these acknowledgements to the SMS 32. Messages which may be passed to the SAS include subscriber suspension, for example, due to non-payment, subscriber modification, for example to add or remove certain commercial offers, and provide rights, for example for a specific event in PPV mode.

The SAS 30 manages databases that store the status of all subscribers declared by the SMS 32. According to the status and the various messages sent by the SMS, the SAS generates EMMs for the subscribers' smartcards. The EMMs are ciphered by the SAS cyphering units 36 and sent to the multiplexer 4. To ensure that the EMMs are received by the subscriber, the SAS sends these messages cyclically. The cycle depends on the type of EMM, but is typically between 30 seconds and 30 minutes.

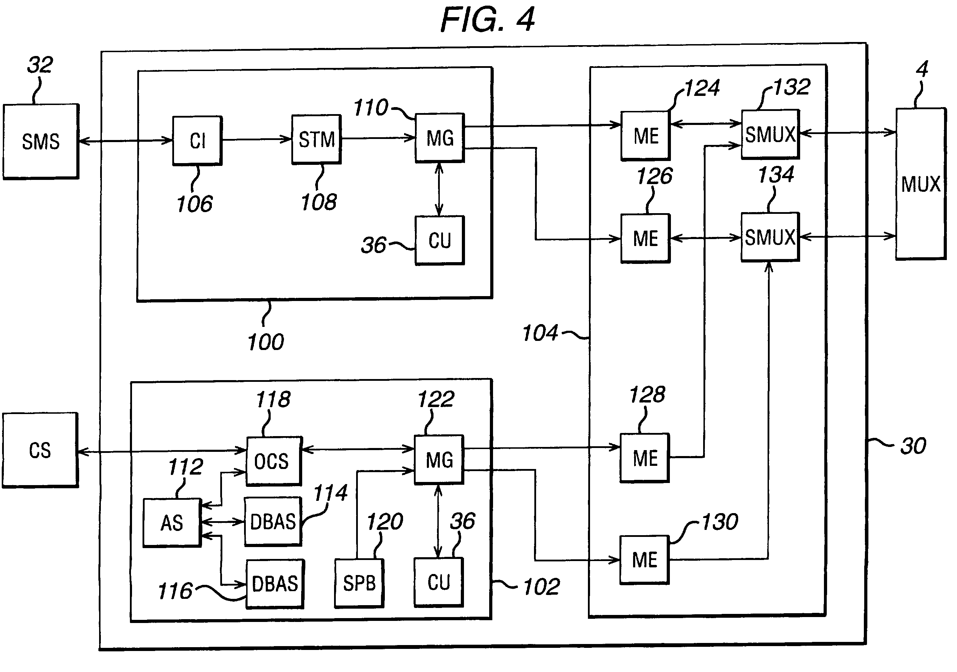

A typical configuration of the SAS 30 is shown in Figure 4. In overview the SAS 30 comprises a Subscription Chain area 100 to give rights for subscription mode and to renew the rights automatically each month, a Pay Per View (PPV) Chain area 102 to give rights for PPV events, and an EMM Injector 104 for passing EMMs created by the Subscription and PPV chain areas to the multiplexer and scrambler 4, and hence to feed the MPEG stream with EMMs. If other rights are to be granted, such as Pay Per File (PPF) rights in the case of downloading computer software to a user's Personal Computer, other similar areas are also provided.

One function of the SAS 30 is to manage the access rights to television programmes, available as commercial offers in subscription mode or sold as PPV events according to different modes of commercialisation (pre-book mode, impulse mode). The SAS 30, according to those rights and to information received from the SMS 32, generates EMMs for the subscriber.

The Subscription Chain area 100 comprises a Command Interface (CI) 106, a Subscriber Technical Management (STM) server 108, a Message Generator (MG) 110, and the Ciphering Unit 36. The PPV Chain area 102 comprises an Authorisation Server (AS) 112, Database Servers 114, 116 which contain relational databases for storing relevant details of the end users, Order Centralized Server (OCS) 118, a Server for Programme Broadcaster (SPB) 120, a Message Generator (MG) 122 whose function is basically the same as that for the Subscription Chain area, and Ciphering Unit 36.

The EMM Injector 104 comprises a plurality of Message Emitters (MEs) 124, 126, 128 and 130 and Software Multiplexers (SMUXs) 132 and 134. In the preferred embodiment, there are two MEs, 124 and 126 for the Message Generator 132, with the other two MEs 128 and 130 for the Message Generator 134. MEs 124 and 126 are connected to the SMUX 132 whilst MEs 128 and 130 are connected to the SMUX 134.

The Message Generators 110 and 122 transform commands issued by the STM 108 and the OCS 118, respectively, into EMMs. The MGs determine the duration and the rate of emission of the EMMs. The MGs also cipher the EMMs using a dedicated ciphering unit. They then pass the ciphered EMM to the respective MEs, which transmit the EMMs cyclically. As shown in Figure 4, more than one ME can be connected to a single MG, the appropriate ME being determined by the MG according to the operator referred to in the EMM. During the lifetime of a given EMM, the MG stores it inside its own database. The EMM is erased from the database as soon as its emission duration has expired. This database ensures consistency between the MG and ME.

The Message Emitters 124, 126, 128, 130 receive EMMs from the respective MGs along with several parameters, such as broadcast start date, broadcast stop date, and broadcast cycle. The MGs then manage the broadcast of the EMMs according to the specified parameters.

### Receiver/decoder

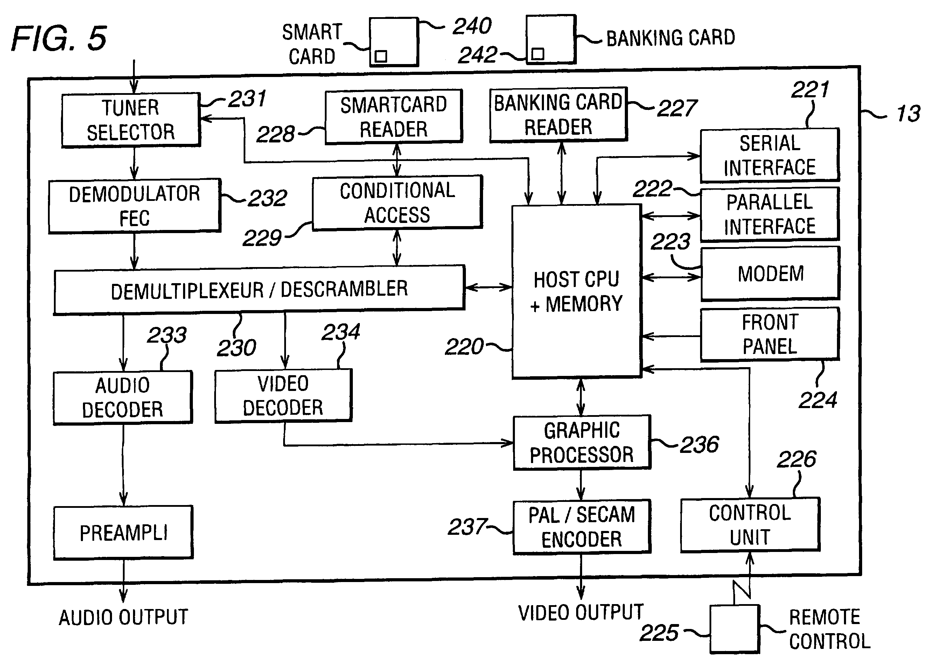

Referring to Figure 5, the various elements of receiver/decoder 13 will now be described in terms of functional blocks.

The receiver/decoder 13, which may be, for example, a digital set-top box (DSTB), comprises a central processor 220 including associated memory elements and adapted to receive input data from a serial interface 221, a parallel interface 222, a modem 223 (connected to the modem back channel 17 of Fig. 1), and switch contacts 224 on the front panel of the decoder.

The receiver/decoder is additionally adapted to receive inputs from an infra-red remote control 225 via a control unit 226 and also possesses two smartcard readers 227, 228 adapted to read bank and subscription smartcards 242, 240 respectively. The subscription smartcard reader 228 engages with an inserted subscription card 240 and with a conditional access unit 229 to supply the necessary control word to a demultiplexer/descrambler 230 to enable the encrypted broadcast signal to be descrambled. The decoder also includes a conventional tuner 231 and demodulator 232 to receive and demodulate the satellite transmission before being filtered and demultiplexed by the unit 230.

As used in this description, an application is preferably a piece of computer code for controlling high level functions of preferably the receiver/decoder 13. For example, when the end user positions the focus of remote control 225 on a button object seen on the screen of the television set 14 and presses a validation key, the instruction sequence associated with the button is run.

An interactive application proposes menus and executes commands at the request of the end user and provides data related to the purpose of the application. Applications may be either resident applications, that is, stored in the ROM (or FLASH or other non-volatile memory) of the receiver/decoder 13, or broadcast and downloaded into the RAM or FLASH memory of the receiver/decoder 13.

Applications are stored in memory locations in the receiver/decoder 13 and represented as resource files. The resource files comprise graphic object description unit files, variables block unit files, instruction sequence files, application files and data files, as described in more detail in the above-mentioned patent specifications.

The receiver/decoder contains memory divided into a RAM volume, a FLASH volume and a ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

### Architecture of receiver/decoder

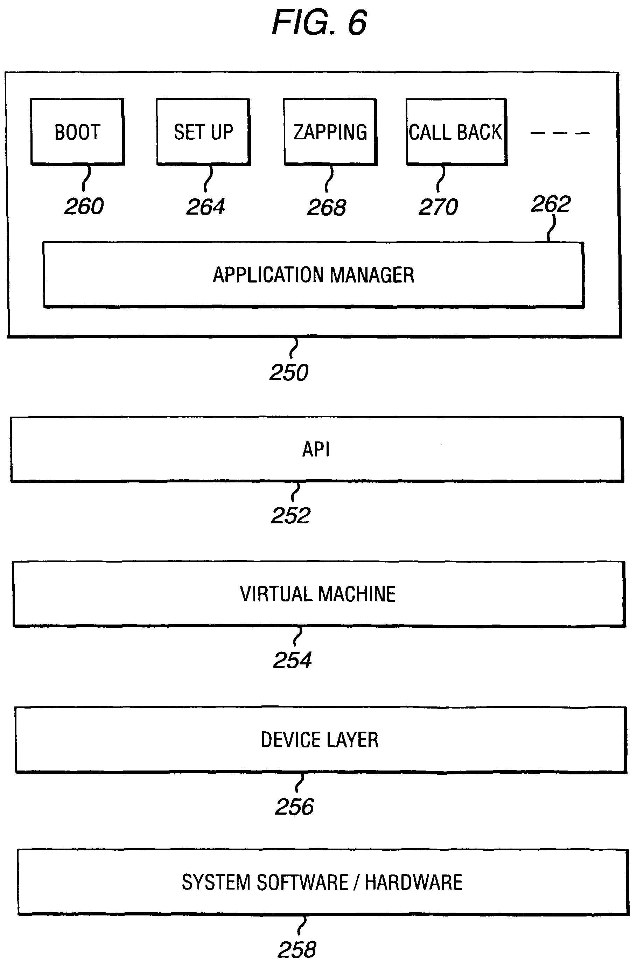

The receiver/decoder contains five software layers, organized so that the software can be implemented in any receiver/decoder and with any operating system. Referring to Figure 6, the various software layers are Application Layer 250, Application Programming Interface (API) layer 252, Virtual Machine Layer 254, Device Layer 256 and System Software/Hardware Layer 258.

The Application Layer 250 encompasses applications that are either resident in or downloaded to the receiver/decoder. They may be interactive applications used by customers, written in, for example, Java, HTML, MHEG-5 or other languages, or they may be applications used by the receiver/decoder to run such applications. This layer is based on a set of open Application Programming Interfaces (APIs) provided by the Virtual Machine layer. This system allows applications to be downloaded to flash or RAM memory in the receiver/decoder on-the-fly or on demand. The application code can be transmitted in compressed or uncompressed format using protocols such as Data Storage Media Command and Control (DSMCC), Network File Server (NFS) or other protocols.

Interactive applications are applications that the user interacts with, for example, to obtain products and services, such as electronic program guides, telebanking applications and games. The following resident applications are used to manage interactive applications:
- Boot. The Boot application 260 is the first application launched when the receiver/decoder is powered on. The Boot application starts the different "Managers" in the Virtual Machine, the first being the Application Manager 262.
- Application Manager. The Application Manager 262 manages the interactive applications that are run in the receiver/decoder, that is, it starts, stops, suspends, resumes, handles events and deals with communication between applications. It allows multiple applications to run at once, and thus is involved in the allocation of resources among them. This application is completely transparent to the user.
- SetUp. The purpose of the SetUp application 264 is to configure the receiver/decoder, primarily the first time it is used. It performs actions such as scanning for TV channels, setting the date and time, establishing user preferences, and so on. However, the SetUp application can be used at any time by the user to change the receiver/decoder configuration.
- Zapping. The Zapping application 268 is used to change channels using the Program-up, Program-down and numeric keys. When another form of zapping is used, for example, through a banner (pilot) application, the Zapping application is stopped.
- Callback. The Callback application is used to extract the values of various parameters stored in the receiver/decoder memory and return these values to the commercial operator via modemmed back channel 17, or by other means.

The API layer 252 provides high-level utilities for interactive application development. It includes several packages that make up this high-level API. The packages provide all the functionality necessary to run interactive applications. The packages are accessible by the applications.

In a preferred embodiment the API is adapted to run applications written in the Java programming language. Furthermore, it can interpret HTML and other formats, such as MHEG-5. Besides these interpreters, it also includes other packages and service modules that are detachable and extensible as requirements dictate.

The Virtual Machine layer 254 is composed of language interpreters and various modules and systems. It consists of everything necessary to receive and execute interactive applications in the receiver/decoder.

The Device Interface layer 256 includes a Device Manager and devices. Devices are software modules which consist of the logical resources necessary for management of external events and physical interfaces. The Device Layer manages communication channels between drivers and applications and provides enhanced error exception checking. Some examples of managed devices are: card readers, modems, network, PCMCIA (Personal Computer Memory Card International Association), LED display and so on. Programmers do not have to deal with this layer directly, since the API layer controls the devices from above.

The System Software/Hardware layer 258 is provided by the manufacturer of the receiver/decoder. Because of the modularity of the system and because services supplied by the OS (such as event scheduling and memory management) are part of the Virtual Machine, the higher layers are not tied to a particular real-time operating system (RTOS) or to a particular processor.

### Receiver/decoder actions

With reference to Figures 1 and 2 above, the present broadcasting system 1 is adapted to send commands from the commercial operator (broadcast supplier) at the SMS 32, via an SAS 30, to a user's receiver/decoder 13, instructing the receiver/decoder to perform specific actions.

For example, the commercial operator may wish to request certain information, for example of selected parameters, from the receiver/decoder, in which case it sends a so-called callback command. On receipt of this command, the receiver/decoder extracts the values of the relevant parameters from its memory and sends the values back to the commercial operator in the form of a callback message. The callback command can be used to request any type of information from the receiver/decoder, such as status or setup options. As an example, the commercial operator may wish to check the signal level received at the receiver/decoder from the satellite dish. The signal level gives an indication of whether the satellite is correctly orientated and whether the receiver/decoder is correctly tuned. The callback command can instruct the receiver/decoder to send the value of the signal level back to the commercial operator. This can help the commercial operator to track any reception problems that may occur. Alternatively, the channel to which a receiver/decoder is tuned, or options selected by a user, could be sent back to the commercial operator using the callback command.

Other information which could be sent by the receiver/decoder includes details of the last actions, for example the last 50 actions, of the receiver/decoder. Such information could be used for statistical analysis and/or for debugging the receiver/decoder. The information could be statistical information regarding parameters and/or settings of the receiver/decoder, for example settings chosen by the user, for example language and/or subtitles settings.

As described in more detail below, the callback is carried out by the receiver/decoder itself and not, for example, by the smartcard. Furthermore, the call back is made to the SAS. The callback may be made, for example, using a telephone link, or in any other way.

Alternatively, the commercial operator may wish information relating to the receiver/decoder to be sent to another apparatus, such as a computer connected to the receiver/decoder, for example via serial interface 21 or parallel interface 22. In this case, information such as that described above is sent to the apparatus.

In another example, the commercial operator may wish to cause the receiver/decoder to perform a scanning operation. Scanning is the operation of tuning channels on the receiver to particular frequencies which carry broadcast signals. This can be done automatically, for example by searching for frequencies which carry signals and setting the receiver/decoder channels to those frequencies. In the case of digital broadcasting, it is also possible to identify the particular broadcast signal by reading Digital Video Broadcasting (DVB) identifiers in the signal. In this way it is possible to assign particular broadcast signals to particular channels. Scanning can be either full, in which case all frequencies are scanned and all signals assigned channels, or partial, for example to find new signals.

A commercial operator may wish to force a receiver/decoder to carry out a full or partial scanning, for example to ensure that the user has all channels tuned in, or because new broadcast signals are being supplied and the tuning of the receiver/decoder should be changed to allow the user to view the new signals. To effect scanning, the commercial operator sends a scanning command to the receiver/decoder. The scanning command may be either to perform full scanning, or else to scan selected channels and/or frequency ranges. On receipt of this command, the receiver/decoder performs the appropriate scanning operation.

The commercial operator may also send a command forcing the receiver/decoder to change to another channel. This might be done, for example, in the case of a disaster, so that the user can be warned of the disaster by a programme which is on another channel. A command is sent specifying the channel to which the receiver/decoder should switch. The channel to which the receiver/decoder should switch may be specified by specifying the channel number. However, the user may have retuned the channels on the receiver/decoder, so that the commercial operator is not aware of which signals the various channels are tuned to. Thus, the channel to which the receiver/decoder should switch is preferably specified by specifying the DVB characteristics of the signal to which the receiver/decoder should switch. On receipt of a command, the receiver/decoder changes to the specified channel.

The command may be configured so that the action is taken by the receiver/decoder at a predetermined time, for example the channel may be changed at a predetermined time.

In order to instruct the receiver/decoder to perform an action, the commercial operator sends a command from the SMS 32 to the SAS 30. This command may either be an "Individual DSTB Action" command, in the case where an individual receiver/decoder is to perform the action, or an "Audience DSTB Action" command in the case where all receiver/decoders, or a group of receiver/decoders, are to perform the action.

It will be noted that the command is sent to the receiver/decoder from the SAS and not directly from the SMS. As described below, the SAS constructs a suitable EMM for transmission to the receiver/decoder.

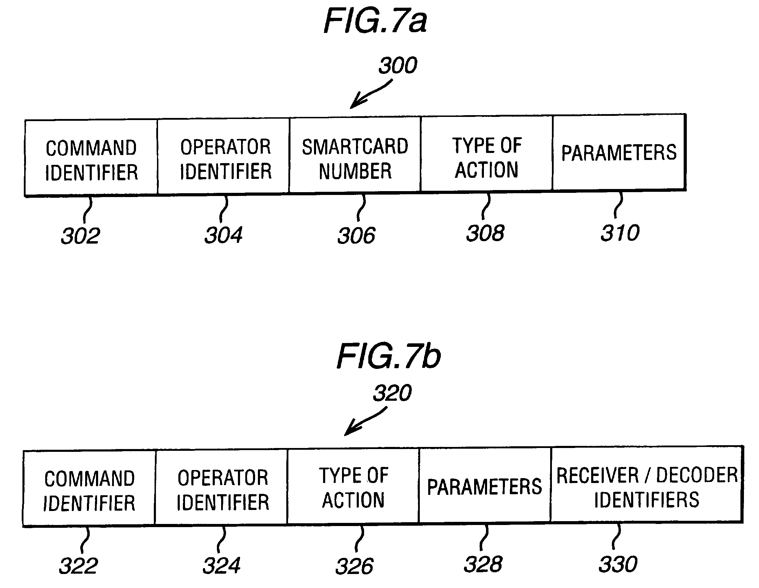

The structure of an Individual DSTB Action command which is sent from the SMS 32 to the SAS 30 is shown in Figure 7a. Referring to Figure 7a, command 300 includes a command identifier 302, operator identifier 304, smartcard number field 306, type of action field 308, and parameters field 310. The command identifier 302 identifies the command as an Individual DSTB Action command. Operator Identifier 304 identifies the commercial operator from which the command originates. The smartcard number field 306 contains the smartcard number of the receiver/decoder which is to perform the action. The type of action field 308 specifies the type of action which is to be taken by the receiver/decoder. The parameters field 310 contains various parameters which are associated with the action, such as channel number to which the receiver/decoder should change.

The structure of an Audience DSTB Action command which is sent from the SMS 32 to the SAS 30 is shown in Figure 7b. Referring to Figure 7b, command 320 includes a command identifier 322, operator identifier 324, type of action field 326, and parameters field 328. The command identifier 322 identifies the command as an Audience DSTB Action command. Operator Identifier 324 identifies the commercial operator from which the command originates. The type of action field 326 specifies the type of action which is to be taken by the receiver/decoder. The parameters field 328 contains various parameters which are associated with the action, such as channel number to which the receiver/decoder should change.

Optionally, command 320 includes a field 330 containing one or more identifiers which identify a particular group of receiver/decoders which are to perform the action. For example, the identifiers may identify a group of receiver/decoders based on one or more of at least geographic area, customer category, commercial offer, session number and product number. Depending on the implementation, only one identifier may be used, or a plurality of identifiers may be used. In the latter case, the plurality of identifiers may be combined using logical operators such as AND, OR, XOR and/or NOT. Further details of the use of identifiers specifying groups of users for whom messages are intended are given in co-pending European patent application number 99401958.6 in the name of the present applicant, the subject matter of which is incorporated herein by reference.

When the SAS receives (from the SMS) an Individual DSTB Action command or an Audience DSTB Action command it constructs a special EMM, referred to herein as a DSTB Action EMM, in order to transmit the command to the appropriate receiver/decoder(s). Referring again to Figure 4, the command sent from the SMS is received by the Command Interface (CI) 106 and passed to the Subscriber Technical Management (STM) server 108. The STM server 108 identifies the command as a DSTB Action command, and instructs the Message Generator (MG) to generate a DSTB Action EMM. In the case of an Individual DSTB Action command, an Individual DSTB Action EMM is generated, while in the case of an Audience DSTB Action command, an Audience DSTB Action EMM is generated.

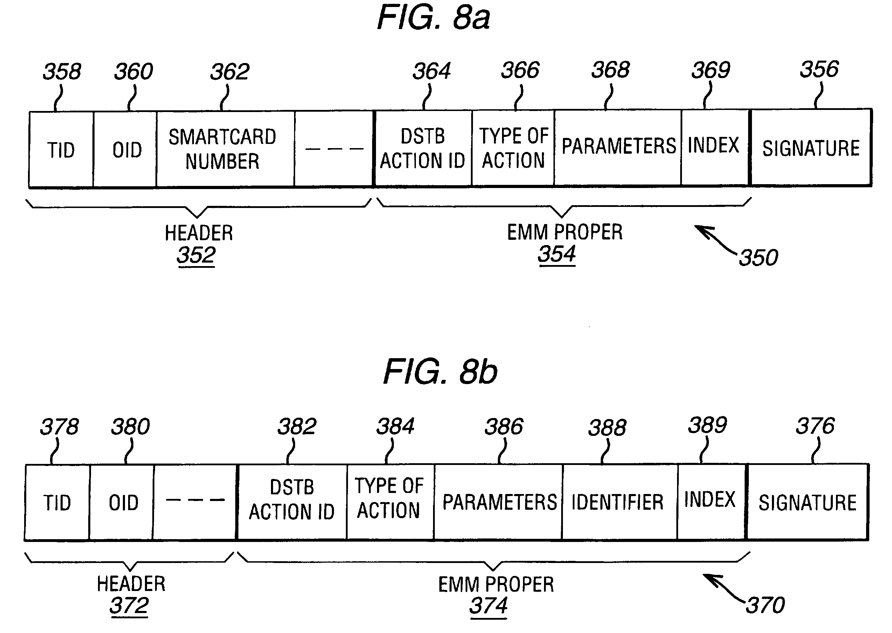

The structure of an Individual DSTB Action EMM is shown in Figure 8a. Referring to Figure 8a, Individual DSTB Action EMM 350 comprises a header 352, EMM proper 354, and, optionally, signature 356. Header 352 contains a type identifier 358, an operator identifier 360, smartcard number field 362, as well as other information as described above with reference to Figure 3. The type identifier 358 identifies the EMM as an individual EMM, the operator identifier 360 identifies the commercial operator which sent the command, and the smartcard number field 362 contains the smartcard number of the recipient receiver/decoder. The EMM proper 354 comprises an identifier 364 which identifies the EMM as a DSTB Action EMM, type of action field 366, which specifies the type of action which is to be taken by the receiver/decoder, a list of parameters 368 which are associated with the action, and index 369 which takes a value which is specific to that particular EMM, so that that EMM can be identified.

The structure of an Audience DSTB Action EMM is shown in Figure 8b. As in the Individual DSTB Action EMM, the Audience DSTB Action EMM 370 contains a header 372, EMM proper 374 and optionally signature 376. Header 372 includes a type identifier 378 which identifies the EMM as an audience EMM and an operator identifier 380 which identifies the commercial operator which sent the command. The EMM proper 374 comprises an identifier 382 which identifies the EMM as a DSTB Action EMM, type of action field 384, which specifies the type of action which is to be taken by the receiver/decoder(s), a list of parameters 386 which are associated with the action, optionally, a field 388 which specifies groups of receiver/decoders which are to carry out the action, and index 389 which takes a value which is specific to that particular EMM, so that that EMM can be identified.

It should be noted that the SAS 30 does not need to recognise the particular action that is to be taken by the receiver/decoder; it merely constructs an EMM which includes the type of action and parameter values which are in the DSTB Action command. In this way, new receiver/decoder actions can be added without the SAS 30 needing to be updated.

As well as generating the relevant EMM, the MG 110 also determines the broadcast start and stop time and cycle rate of the EMM. The length of time for which a EMM is to be broadcast and the cycle rate are generally set to a certain value for DSTB Action EMMs, but they might be altered, for example, at the request of the operator, or in dependence on the global bitrate of the broadcast signal. Once the EMM has been generated, it is optionally ciphered using Ciphering Unit 36. In many cases, however, ciphering of the EMM will not be required.

The EMM, together with the broadcast start and stop time and cycle rate, are then passed to the EMM injector 104. The EMM injector is responsible for inserting the EMM into the broadcast data stream at the appropriate times, in dependence on the broadcast start and stop time and cycle rate. The EMM is stored in a database at the Message Emitter (ME) 124 or 126. The EMM is inserted into the broadcast data stream by the appropriate software multiplexer (SMUX) 132 or 134, and multiplexer 4. The EMM is then transmitted in the broadcast signal for reception by the receiver/decoder 13.

Referring again to Figure 5, the broadcast signal is received and demodulated by tuner 31 and demodulator 32 respectively. The demodulated signal is passed to demultiplexer 30, which separates the various components of the signal. Audio signals are passed to audio decoder 33, video signals are passed to video decoder 34, and EMMs are passed to central processing unit (CPU) 20 and stored in a buffer.

The receiver/decoder 13, under control of the application manager (block 262 in Figure 6), first determines whether the EMM is an audience EMM or an individual EMM, by checking the type identifier 358, 378. If the EMM is an individual EMM, it checks the smartcard number in the smartcard number field 362 of the EMM to see if it corresponds to the smartcard number of the receiver/decoder. If the smartcard numbers correspond, the EMM is kept; if not, it is discarded. The receiver/decoder then determines the type of EMM, by extracting the value from the EMM identifier field 362, 382. In the case of a DSTB Action EMM, the receiver/decoder identifies the EMM as such. It then extracts the type of action to be taken from the type of action field 366, 384, and the associated parameters from the parameters field 368, 386.

In the case of an Audience DSTB Action EMM, if field 388, which specifies groups of receiver/decoders which are to carry out the action, is present, the receiver/decoder extracts the values from that field and compares them to the values of corresponding parameters stored in the receiver/decoder memory or in the smartcard. Stored in the CPU memory are various user identifiers, such as geographic zone and customer category of the user, and commercial offers, products and sessions which the user has purchased. The receiver/decoder compares the identifiers extracted from the EMM to the corresponding user identifiers. Where logical operators are included, the receiver/decoder extracts the logical operators and applies them to the identifiers. In this way, the receiver/decoder is able to determine whether or not it should perform the action.

So that repeatedly broadcast commands are only executed once (two successive identical commands sent by the SMS are considered as two different commands), the DSTB has logical buffers to store previous commands. When the DSTB receives a command, it checks the buffers to see if they contain a command identical to the one received. If so, the DSTB will not execute it.

Once the action to be taken and the associated parameters have been extracted, the receiver/decoder performs the appropriate action. Action is taken in the receiver/decoder by calling the appropriate application in the receiver/decoder.

For example, if the action is to change channel, then a call is made to the zapping application 268, specifying the channel number to which the receiver/decoder should tune, or the DVB characteristics of the signal corresponding to the channel to which the receiver/decoder should tune. The receiver/decoder keeps a table of channels and the corresponding DVB characteristics, for example the DVB triplet, of the signals to which the channels are tuned. In this way, the receiver/decoder can determine which channel corresponds to which incoming signal. Thus, by specifying the DVB characteristics, for example the DVB triplet, of the signal to which the receiver/decoder should tune, the receiver/decoder can tune to the correct signal even if the user has retuned the receiver/decoder.

If the action is to reconfigure the receiver/decoder, then a call is made to the SetUp application 264, specifying that the receiver/decoder is to be reconfigured. If the action is to rescan some or all channels, then a call is made to the SetUp application 264, specifying which channels and/or which frequency ranges are to be rescanned. If the action is to report on the receiver/decoder status, then a call is made to the callback application 270. The callback application then extracts the values of various parameters stored in the receiver/decoder memory and returns these values to the operator via modemmed back channel 17, or by other means. Parameters which may be returned by the callback application include the last 50 actions performed by the receiver/decoder, the channel to which the receiver/decoder is tuned, the frequency to which the receiver/decoder is tuned, signal level at the input to the receiver/decoder, options chosen by the subscriber, such as language, subtitles or personal preferences, or any other information available to the receiver/decoder.

Finally, when the receiver/decoder has received a DSTB Action EMM, it "burns" the EMM, so that the action is not repeated. This is done by comparing incoming EMMs to ones that have already been received, by using the index 224 in the EMM. Incoming EMMs which have the same index as EMMs which have already been received, are removed from the buffer.

The following example illustrates how the receiver/decoder can be used to enable debugging from a remote location. Such debugging is, for example, carried out on a subscriber's receiver/decoder by the commercial operator, without the need for the commercial operator to visit the subscriber to inspect and/or test the subscriber's equipment. The example illustrates the advantage of a system in which commands may be sent to an individual receiver/decoder and in which the individual receiver/decoder may send information to the commercial operator.

According to the example, a subscriber notes a poor signal of a channel, for example channel 16, of his receiver/decoder, in this case a DSTB. The subscriber contacts the commercial operator (for example by telephone) and reports the poor signal. The commercial operator causes a command to be sent to the DSTB of the individual subscriber to request from the DSTB information regarding the tuning of channel 16 and its signal strength. On receipt of the command, the DSTB sends the requested information to the commercial operator. The commercial operator analyses the information and can then, for example, send a further command to the receiver/decoder to perform an action to improve the signal of channel 16. That action may be, for example, a forced retuning of the channel to improve the signal.

Thus it will be seen that the problem experienced by the subscriber, in this case the poor signal, has been overcome without requiring a visit to the subscriber's home by the operator.

In summary, the commercial operator can send a message to order the DSTB of a subscriber to perform a particular action:
- Change the current channel with the channel being defined by the number (but this number can be redefined by the subscriber, so this is only useful to a particular operator).
- Change the current channel with the channel being defined by the DVB channel characteristics

The commercial operator can also send a message to order the DSTB of all subscribers to perform a particular action:
- Change the current channel with the channel being defined by the number (but this number can be redefined by the subscriber, so this is only useful to a particular operator).
- Change the current channel with the channel being defined by DVB channel characteristics

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A method of instructing a receiver/decoder to perform an action, the method comprising transmitting a command to the receiver/decoder via a broadcast system, the command instructing the receiver/decoder to perform the action.

2. A method according to claim 1, wherein the command is transmitted as part of a message, and preferably the message is in the form of an entitlement management message.

3. A method according to claim 2 wherein the message is not encrypted.

4. A method according to claim 2 or 3, wherein the message further comprises an identifier of a commercial operator.

5. A method according to any of claims 2 to 4, wherein the message comprises an identifier of at least one receiver/decoder, and wherein the command instructs the at least one receiver/decoder to perform the action.

6. A method according to claim 5, wherein the message comprises an identifier of only one receiver/decoder, and wherein the one receiver/decoder performs the action.

7. A method according to any of claims 2 to 6 wherein the message is generated by a Subscriber Authorization System (SAS).

8. A method according to any of the preceding claims wherein the command is sent by a Subscriber Management System (SMS) to the SAS for transmission and preferably, the command is transmitted by the SAS.

9. A method according to any of the preceding claims, wherein the command is transmitted to the processor of the receiver/decoder.

10. A method according to any of the preceding claims, wherein the action comprises altering a setting and/or parameter of the receiver/decoder.

11. A method according to claim 10, wherein the action comprises at least one of changing channels, changing the tuning of a channel and scanning channels, wherein preferably the scanning channels may comprise a full scan, a scan of a part of a range and/or an update scan, and wherein the changing of channels is preferably effected using DVB information relating to the channels.

12. A method according to any of the preceding claims, wherein the action comprises sending information from the receiver/decoder, and preferably the information is information relating to the receiver/decoder.

13. A method according to claim 12, wherein the information comprises information regarding one or more of the settings and parameters of the receiver/decoder, actions carried out by the receiver/decoder and channel signal strength.

14. A method according to claim 12 or 13, wherein the information is sent by the processor of the receiver/decoder.

15. A method according to any of claims 12 to 14, wherein the information is sent to an SAS or to an apparatus which can communicate with the receiver/decoder.

16. A method according to any of the preceding claims, further including the step of performing the action at the receiver/decoder in dependence on the command, and preferably including the step of subsequently deleting the command.

17. A method of determining a setting and/or parameter of a receiver/decoder from a location remote from the receiver/decoder, the method comprising the step of transmitting a command from the remote location via a broadcast system to the receiver/decoder, the command requesting the receiver/decoder to send information relating to the setting and/or parameter of the receiver/decoder.

18. A method of altering a setting and/or parameter of a receiver/decoder from a location remote from the receiver/decoder, the method comprising transmitting a command from the remote location via a broadcast system to the receiver/decoder, the command requesting the receiver/decoder to alter a setting and/or parameter of the receiver/decoder.

19. Apparatus for generating a message for transmission via a broadcast system, comprising means for generating the message, the message comprising a command instructing a receiver/decoder to perform an action.

20. Apparatus for transmitting a command to a receiver/decoder via a broadcast system, the apparatus comprising a transmitter for transmitting a command to the receiver/decoder to instruct the receiver/decoder to perform an action.

21. A receiver/decoder comprising a receiver for receiving a command from a transmitter, and a processor for performing an action in response to the command, wherein the transmitter is preferably part of a broadcast system.

22. A receiver/decoder comprising means for receiving a command from a broadcast system and means for performing an action in response to the command.

23. A system comprising apparatus according to claim 19 or 20 for generating a command and a broadcast system for transmitting the command to a receiver/decoder, and preferably further comprising a receiver/decoder according to claim 21 or 22.

24. A message for transmission in a broadcast system, the message comprising a command to instruct the receiver/decoder to perform an action.

25. A message for instructing a receiver/decoder in a broadcast system to perform an action, the message comprising a command to instruct the receiver/decoder to perform the action.
